# EUROPEAN PATENT APPLICATION

(11) **EP 4 769 265 A1**
(43) Date of publication of application: **01.07.2026**
(21) Application number: 24223579.4
(22) Date of filing: 28.12.2024
(51) Int. Cl.: G06Q 10/0639, G06Q 10/0637

(54) **METHOD FOR CONTROLLING A CUSTOMIZED POSITIVE WORK ENVIRONMENT IN A BUILDING**

(71) Applicant: Vilniaus Gedimino technikos universitetas, 10223 Vilnius (LT)
(72) Inventor: KAKLAUSKAS, Arturas, 08402 Vilnius (LT); BUCINSKAS, Vytautas, 10231 Vilnius (LT); DZEDZICKIS, Andrius, 14188 Vilnius (LT); KAKLAUSKIENE, Loreta, 08402 Vilnius (LT)
(74) Representative: Draugeliene, Virgina Adolfina

(57) **Abstract**

The present invention relates to the work environment adaptation method for buildings and a system for realization the adaptation method that creates a certain effect and analyses levels of a person's performance and happiness taking into account the current work environment in a fixed or mobile workplace. Such systems make it possible to analyse and improve the overall labour efficiency, and in particular the maintenance and extension of the period of valuable human performance, and allow making changes to work environment data to adjust them to an employee's short- and medium-term responses. This system is based on long-term research and makes use of the advances in artificial intelligence (Al) and affective computing systems.

## Description

### Technical field to which invention relates

The present invention relates to the work environment adaptation method for buildings and a system for realization the adaptation method that creates a certain effect and analyses levels of a person's performance and happiness taking into account the current work environment in a fixed or mobile workplace. Such systems make it possible to analyse and improve the overall labour efficiency, and in particular the maintenance and extension of the period of valuable human performance, and allow making changes to work environment data to adjust them to an employee's short- and medium-term responses. This system is based on long-term research and makes use of the advances in artificial intelligence (AI) and affective computing systems.

### Indication of the background art

In recent years, various emotional and affective indicators have been studied, including the net emotional value, the service encounter emotional value, the hedonic value and the perceived value, to establish a personal response assessment criterion and express it numerically.

The Net Emotional Value (NEV) is one such criterion, calculated by subtracting estimated negative emotions from estimated positive emotions. To calculate NEV, average negative emotion (dissatisfied, frustrated, disappointed, irritated, tense, unhappy, ignored, rushed) intensity are subtracted from average positive emotion (happy, satisfied, confident, valued, offered attentive service, safe, focused, forgiving, stimulated, exploring, interested, vigorous) intensity. The higher the criterion value, the better the person feels.

Over time new biometrics methods, based on instrument-based data (e.g. heart rate, heart rate variability, breathing rate, galvanic skin response, eye tracking, pupil dilation, EEG, ECG) monitoring, were added to the pool of human mood and performance measurement techniques. Biometrics also emerged, a new specialised field of research that makes use of various biometrics tools (e.g. functional magnetic resonance imaging (fMRI), electroencephalography, facial expressions, the tone of voice, heart rate). They aid in recognising an employee's responses to work environment-induced stimuli classified in line with the SIS International Market Research methodology.

Several technical solutions for personalised work environment management in buildings are currently known. They present technical solutions for biometrics parameters measurement, define the devices to determine data that describe human emotions, but do not present directly the proposed work environment adaptation method and the devices for its embodiment.

One field of climate control application, a car climate control system, is described in the US patent US9677894B2 that presents a case of using human biometric data to adjust cabin climate control data inside a car. This climate system has its data controlled automatically based on pre-set climate data determined after biometric recognition identifies a driver or a passenger. The system is adaptive in the way it selects pre-set human profiles, but does not take into account real-time parameters changes. On the other hand, the setting of a profile's climate data is only the user's external assessment with the human body's response ignored.

The US patent US8478447B2 describes a climate control system consisting of multiple climate adjustment microdevices controlled from a single computer-based control centre. A system of this type makes it possible to work on climate adjustments in case of contradictory temperature and humidity demands for various zones in living or work spaces. Such systems do not offer direct biometric control.

The US patent application US20110272131A1 describes a system for controlling the climate in a car cabin that controls air temperature and airflow velocity and either turns them up or down. The control data are determined by a special handheld sensor. The temperature of and the amount of sweating on the hand determines the values of climate data and sensor data are sent to the climate control system by wireless means. The system's quick operation has not been described; the data it determines remain fairly static and do not respond to the sensations experienced by a person or the person's tiredness.

The US patent application US20140310105A1 describes a system of wearable sensors and a computer system for processing their signals to describe an individual's state and control various devices on that basis, including a personalised climate control system. This invention makes it possible to base device control on direct sensor input, but its technical solution does not take into account MAP² states.

A similar solution is presented in the US patent application US20140222735A1 where a computer is used to transcript mood and assess sensor readings. A computer-system-implemented method analyse the individual's mood is at least one of anger, sadness, happiness, enjoyment, neutral, ambivalence, frustration, and surprise, and further comprise providing targeted content based on the individual's determined mood. The solution also produces a control signal based on the signal received from a wearable sensor, but the mood are not decoded or analysed.

An advanced climate control system is presented in the US patent US9020647B2. The system uses industry comfort climate setting data stored in a permanently connected database. Each employee sets a comfortable climate level, then individuals are recognised by their biometric data and climate is adjusted for each individual. The system is not interactive in terms of personal comfort; it responds by recognising individuals in various spaces of a building.

A technical solution to determine the physical performance of an individual and express it as an objective criterion value is described in the US patent US9478149B2. This patent focuses on instant assessment of the physical state of an individual, but is hardly designed to determine intellectual productivity. This invention reflects biometric data of individuals and their processing to determine characteristics, but does not offer a technical solution appropriate for climate parameters control.

The patent application US20190208488A1 describes an affective computing server (ACS) incorporated into a mobile wireless network management infrastructure. ACS, over a mobile wireless network, maintains optimal personalised comfort status of a user of a wearable sensors network (e.g. sensors, user identification, current user location). ACS, over mobile wireless network technology, receives data on the user's comfort status profile. Based on the received data on the user's comfort status profile, ACS changes climate data (temperature, humidity, air quality) in a fixed or mobile space. Tuned climate spaces, fixed or mobile, are important in the context of smart cities, homes and residential spaces, where the proposed system and the method of operation personalise an environment meeting personal needs of users to maximise comfort/satisfaction of multiple users. A wide range of indoor environments within a managed space leads to a varied distribution of ambient indoor temperatures. The proposed system and method adapt the climate in a fixed or mobile environment to suit unique biometrics, psychological and comfort profiles of specific occupants. This is done by taking into account the dynamic nature of indoor environment conditions to meet instantaneous user comfort and needs. Based on the user biomarker data detected by the wearable sensors and the pre-set preferences of the specific user(s), the proposed system makes dynamic adjustments of indoor climate data to suit personal user comfort profiles, together with user wellness monitoring.

KAKLAUSKAS A ET AL: An Affect-Based Built Enviromment Video Analytics" AUTOMATION IN CONSTRUCTION, ELSEVIER, AMSTERDAM, NL, vol.106, 28 June 2019 describes the research, which integrates objective and subjective human analyses of the built environment. These were conducted from two perspectives: that of an individual and that of the built environment. The known research design uses an integrated method with intelligent and biometrical technologies served as the basis for developing the Affect-Based Built Environment Video Analytics (BEST). BEST gathers and analyzes data on human affective attitudes and emotional and biometrics states in the built environment and delivers these to city planners and stakeholders in maintenance and management. This is performed by applying neuro decision tables and an inhabitant-centered method for mining human emotion data from the built environment under analysis. The methods employed during the known design process of the non-experimental research were correlational research (discovery of the relationships among variables under analysis; see Stage 9 and Chapter 6) and descriptive research (two pilot case studies). The known technical solution does not disclose the use of work environment related information and emotional, affective, biometrics, valence, arousal (MAP) states and performance (MAP²) information showing employee' productivity and happiness (PITH) models in order to show the relation between work environment factors and employee MAP² data. The described known technical solution makes no mention of employee performance at all, whereas our proposed invention applies relevant work environment data to achieve the highest productivity. The known technical solution makes no mention of values (utilitarian, hedonic, user perceived, emotional and others) that would offer a more accurate explanation of user comfort status, responses, feelings and preferences. The known described our research of affect-based built environment video analytics focuses on statistical methods to determine real-time statistical relationships between outdoor built environment and the emotional, affective and biometrics state. In our patent application, however, "probability theory or statistical methods are applied to determine these real-time statistical relationships between work environment and the MAP² variables of users". Our application determines the most rational work environment variables to improve work productivity and happiness at once. This method being proposed is a mass customisation technique.

### KIM MINJUNG ET AL "Effect of thermal sensation on emotional responses as measured through brain waves", BUILDING AND ENVIRONMENT, PERGAMON PRESS, OXFORD, GB, vol.118, 16 March 2017-03-16) pages 32-39

The known technical solution describes and study aims to investigate the effect of thermal sensations on people's emotional responses. For achieving this purpose, chamber experiments were conducted based on three different temperatures (PMV -2, 0, +2), and results were obtained from 139 participants' brain wave data. Positivity bias was observed when participants felt neutral and slightly warm, and negativity bias was observed in all other cases. This study supports the notion that the thermal environment affects occupants' emotional responses through subjective thermal sensations. The known technical solution does not disclose the use of work environment related information and MAP² information showing employee productivity and happiness (PITH) models in order to show the relation between work environment factors and employee MAP² data. The known analogue examines only indoor environment temperature, whereas our application takes a considerably broader look at work environment and covers n factors. The known analogue does not examine affective (e.g. bored, interested, confused) and biometrics states. The known analogue makes no mention of performance at all, whereas this proposed invention applies relevant work environment data to achieve the highest productivity. The known analogue makes no mention of values (utilitarian, hedonic, user perceived, emotional and others) that would offer a more accurate explanation of user comfort status, responses, feelings and preferences. In the known analogue study, the event-related potentials (ERPs) method, which is one of the methods for brain wave analysis, is used to measure human emotion. Whereas in the invention we have proposed "probability theory or statistical methods are applied to determine these real-time statistical relationships between work environment and the emotional, affective, biometrics, valence, arousal (MAP) states and performance (MAP²) variables of users". Our patent application analyses what degree of cumulative effect n indicators describing the quality of the work environment have to improve work performance and happiness immediately. This method being proposed is a mass customisation technique.

KAKLAUSKAS ARTURAS ET AL: Diurnal emotions, valence and the coronovirus Lockdown in public space" ENGINEERING APPLICATIONS OF ARTIFICIAL INTELLIGENCE, PINERIDGE PRESS, SWANSEA, GB, vol98, 28 November 2020 (2020-1128).

The performance research of this analogue was under real conditions producing results that conform to natural human diurnal and seasonal rhythm patterns. The derived results of this, 208 million data research on diurnal emotions, valence and facial temperature correlate with the results of an analogical Twitter research performed worldwide (UK, Australia, US, Canada, Latin America, North America, Europe, Oceania, and Asia). It is established that diurnal valence and sadness were correlated with one another both prior to and during the period of the coronavirus crisis, and that there are statistically significant relationships between the values of diurnal happiness, sadness, valence and facial temperature and the numbers of their data. The known analogue (abstract; pages 2-8 and I7) does not disclose the use of work environment related information and MAP² information showing employee productivity and happiness (PITH) models in order to show the relation between work environment factors and employee MAP² data. The known our analogue does not examine work environment and outdoor climate parameters at all and instead only focuses on human facial temperature. This analogue makes no mention of performance at all, whereas this proposed invention applies relevant work environment to achieve the highest productivity. The analogue makes no mention of relationships between work environment model and happiness and productivity at all. The known analogue also makes no mention of values (utilitarian, hedonic, user perceived, emotional and others) that would offer a more accurate explanation of user comfort status, responses, feelings and preferences.

CN 110470033A (HAIR SMART HOME CO LTD), 19 November 2019, describes a method for controlling an air conditioner, wherein indoor climate is controlled depending on occupant's emotional, affective and biometric data reflecting the occupant's state, and comprises following steps:
a) real-time recording of indoor climate data to a computer memory,
b) real-time monitoring and decoding of the occupant's emotional, affective and biometric state by a set of sensors,
c) transmitting of the data about the occupant's emotional, affective and biometric state decoded by the set of sensors to a biometric information collection and conversion device,
d) recording of data collected and converted in the biometric information collection and conversion device to the computer memory, from which the data is transmitted to a central processing unit (CPU),
e) CPU is configured to perform numerical evaluation by determine in real-time statistical relationships between indoor climate and the occupant's emotional, affective and biometric states in order to form the control parameters of ambient indoor climate and transmit the control parameters to a climate microcontroller.

The known method determine the emotional state of the person; obtaining a temperature adjustment process that matches the emotional state of the person; control the operation of the air conditioner according to the temperature adjustment process; wherein, the temperature adjustment process includes a set temperature that changes with time and a set wind speed that changes with time. Emotional states of the person may be a distressed state or an emotional claim, or emotional state. According to the changes of emotional states the set temperature changes with time and set wind speed changes with time.

The known method is mass customatization technique, which analyses only two indoor environment parameters: temperature and the wind speed, it does not analyse affective states (e.g. bored, interested, confused) and makes no mention of performance at all. Whereas the scope of work environment analysis in the proposed application is considerably bigger and includes plurality factors, that allow to achieve the highest performance.

Known method uses a universal method for controlling air-conditioning, intended for all users, regardless of their age, gender, habits, health and other user characteristics. Instead of probability theory or statistical methods to determine these real-time statistical relationships between indoor climate and the performance, emotional and biometrics state, known method analyses a different method. Whereas in our application "probability theory or statistical methods are applied to determine these real-time statistical relationships between work environment and the emotional, affective, biometrics, valence, arousal (MAP) states and performance (MAP²) variables of users".

The known methods and systems help with personalised work environment management in fixed or mobile environments, but cannot be applied to determine various related values (utilitarian, hedonic, user perceived, emotional and other values) that would offer a more accurate explanation of user comfort status, responses, feelings and preferences. The aim is, therefore, to have an improved method and system available that would give stakeholders smart work environment management for a fixed or mobile environment. In addition, this method and system do not offer repetitive, average, strong and very strong statistical relationships between variables that would make it possible to get an accurate and objective view of a personalised work environment management process in a fixed or mobile environment. They do not, for instance, determine real-time employee productivity and happiness (PITH) models and relationships between the ambient work environment and user MAP² data with the help of probability theory or statistical methods. The know method, therefore, does not make it possible to learn more about the efficiency of work environment changes in an environment at each stage of the process to help determine the advantages and disadvantages of work environment changes in such environment.

Due to the aforementioned attributes, the known work environment adaptation methods and devices for buildings are not accurate or reliable and have a narrow field of application.

### Technical problem to be solved

The invention aims to make the personalised work environment adaptation method for buildings and the method's embodiment system more accurate and reliable and expand their scope of application by creating a method for work environment management in fixed or mobile workplaces taking into account a person's MAP² state and a system to embody the method that makes it possible to determine how a person feels and apply relevant work environment data to achieve the highest performance and happiness of the said person or establish the person's rest break schedule.

### Disclosure of the invention

This is achieved by the method for controlling a customized positive work environment in a building and realization system thereof according to claims 1-5

### Advantages of the invention

The personalised work environment adaptation method for buildings and its embodiment system assess an employee's MAP² states by processing data in an affective computer, and assess the person's MAP state and the level of performance that determine optimal work environment data for a fixed or mobile workplace. The data are determined dynamically to produce small work environment adjustments at set intervals taking into account the employee's performance and happiness in real-time to find optimal work environment parameters for the workplace environment (smells, music, films, images, information, knowledge, temperature, humidity, air pollution, magnetic storm, atmospheric pressure, medical substance, physical activities, oxygen, vibrations, lighting intensity and colours) for that specific time period. The system is universal and independent of the work environment zone, but it depends on the type of an indoor space. It enables preventive analysis of employees MAP states and can respond to performance and happiness changes that can affect the rhythm of work assignments or the schedule of rest breaks if the work planned cannot be done or its performance can be riddled with errors. The proposed method and the devices required for its embodiment make it possible, with the help of research-based methods, to determine optimal work environment data that match the employee's period of performance (e.g. the Yerkes-Dodson Law) and happiness.

The proposed method and its embodiment system use special data processing procedure with neuro decision matrices, which serve as a basis to generate work environment alternatives and calculate their utility degrees and priority. Then employee productivity and happiness (PITH) models are used to look for the relationships between the data and determine the strength of those relationships; such employee productivity and happiness (PITH) models show the interdependencies linking the employee's performance and happiness to work environment data and are used as a basis in the selection of work environment management data. In addition, these matrices ensure maximum reliability of data relationships that match the actual effect of work environment conditions on the employee, thus the proposed method and embodiment system offer high control accuracy, reliability and can be widely applied in all areas where control of work environment based on an employee's state is required in a fixed or mobile (e.g. a car) workplace.

With the help of multiple criteria decision methods (such as INVAR) that use real-time neuro decision matrices, real-time utilitarian, hedonic, user perceived, emotional and other values for work environment are calculated. These values must fall within pre-set minimum (user needs the least satisfied, but very low operating costs of work environment) and maximum (user needs the most satisfied, but very high operating costs of work environment) boundaries. If the value falls within the minimum and maximum boundaries, the work environment remains unchanged, but when the data fall outside the boundaries, the work environment is adjusted again taking into account the pre-set statistical performance and happiness employee productivity and happiness (PITH) models. Neuro decision matrices are used for that specific purpose.

One of the most important aspects that make this patent innovative is that utilitarian, hedonic, user perceived, emotional and other values of work environment are determined in real-time. A neuro decision matrix includes columns that describe specific work environment n and rows m that show an employee's MAP² state changing in real-time and work environment data that describe work environment and their employees in detail. Arousal is determined based on biometrics user data, facial expression recognition software. The neuro decision matrix also includes measuring units, criteria weights, and a minimising/maximising criterion. This facilitates real-time multiple criteria analysis of work environment and the MAP² states of users to determine the values for work environment, and makes the physical purpose of the calculations clearer. Real-time multiple criteria analysis of work environment and the MAP² of users usually means that large amounts of information must be processed; it is, therefore, rational to use matrices for such processing. In this case, work environments, employees and the data that describe them are grouped in a certain way, i.e. a neuro decision matrix is generated. When the criteria intensity and weights have been determined (the weights are pre-set by users and experts), multiple criteria analysis methods (such as INVAR) are applied to determine the utility degree, priority and values (utilitarian, hedonic, user perceived, emotional and other values) for work environment in real-time.

Real-time employee productivity and happiness (PITH) models are also determined among multiple work environment data and MAP² data of users. Probability theory or statistical methods are applied to determine these real-time statistical relationships between work environment and the MAP² variables of users. Several different correlation coefficients can be used, such as Pearson's correlation coefficient, Spearman's rank-order correlation or others. Set of sensors can measure variables such as indoor humidity, temperature, lighting, air pollution, which have strong correlations with the MAP² states of users. This means that the MAP² variables of users make a direct impact on the decision to set personalised work environment.

### Brief description of the drawings

Fig. 1 shows illustrative block scheme of system for realization of method for controlling a customized positive work environment in a building
Fig. 2 shows a workflow process of the realization system presented in Fig. 1.
Fig. 3 shows the interdependency between arousal and performance.
Fig. 4 shows the data processing procedure with neuro decision matrices, employee productivity and happiness (PITH) models and the work environment model generated and calculation of the principal components adjustment coefficients in the form of control data
Fig. 5 demonstrates the data processing and analysis step.
Fig. 6 shows the development of work environment services' (various smells, music, films, images, information, knowledge, temperature, humidity, air cleaning, oxygen, physical activities, medical substance, vibrations, lighting intensity and colours) combination options based on the effect size and user priorities and selecting the most rational work environment' services to improve work productivity and happiness at once.

### One of the examples of the embodiment of the invention

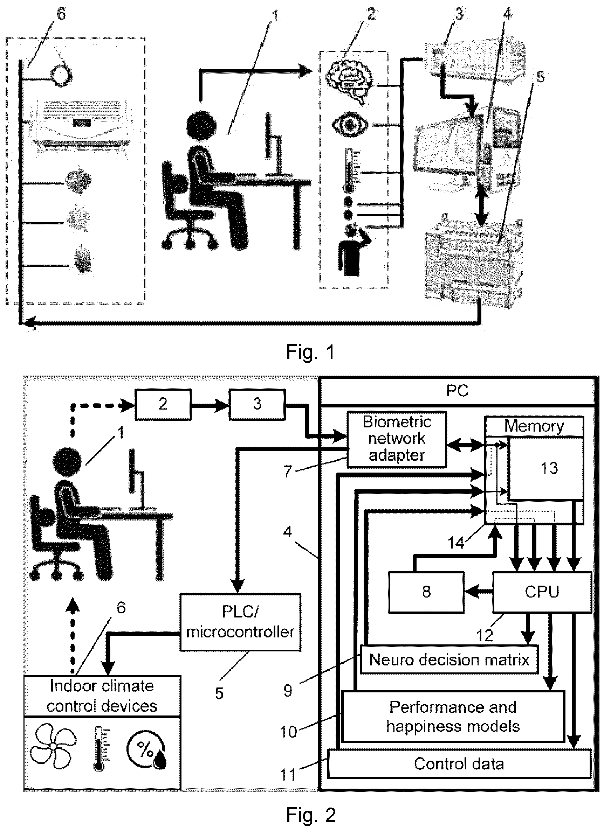

The embodiment system of personalised work environment management for buildings shown in Fig. 1 is designed to analyse the MAP² data of the employee 1 as part of the work environment management process. The work environment control devices (e.g. HVAC equipment, audio and video equipment) of a specific indoor space of a specific building is used to determine and control the work environment services (various smells, music, films, images, information, knowledge, temperature, humidity, air cleaning, oxygen, physical activities, medical substance, vibrations, lighting intensity and colours) 6, and a set of sensors 2 that measures the employee's MAP data is used to determine the employee's emotional state (e.g. happy, sad, angry, scared, disgusted), affective state (e.g. bored, interested, confused), valence, arousal and biometrics state (e.g. face temperature, heart rate, breathing rate, galvanic skin response, eye tracking, pupil dilation, EEG, ECG). The set includes sensors 2 for electroencephalography (EEG), pupil response, heart rate, breathing rate, body temperature and its variation, perspiration and many other known biometrics responses. These sensors 2 by applying a data bus transfers data directly to a MAP information conversion device 3 connected to an affective computer (PC) 4 which normalises (groups by weight and removes repetitions) and analyses the data, and generates control commands for the work environment management PLC/microcontroller 5. MAP information conversion device 3 is used to convert the user biometrics data, which is transmitted and saved to the affective computer 4. The bus connection between the MAP information conversion device 3 and the affective computer 4 can be either standard wireless link (e.g. Wi-Fi, 5G, 4G mobile wireless) or specialised with an additional data channel in case large amounts of data need processing. The PLC/microcontroller 5 receives data from the affective computer 4 and manages work environment control devices (e.g. HVAC equipment, audio and video equipment) that maintains the work environment services (various smells, music, films, images, information, knowledge, temperature, humidity, air cleaning, oxygen, physical activities, medical substance, vibrations, lighting intensity and colours) 6 data.

Fig. 2 shows a flowchart of the embodiment system of personalised work environment management for buildings presented in Fig. 1. The system's operation starts with the set of sensors 2 that measure the MAP data of the employee 1. These measurements are then sent to the MAP information conversion device 3, which then transfers the measurements to the memory 14 of the main affective computer (PC) 4 via a MAP network adapter 7. The data from the set of sensors 2 are added to the work environment model 13 stored in the memory and sent to a central processing unit (CPU) 12 for determining the MAP levels 8. Integrated analysis of employees' MAP² states and work environment comprises recognizing the principal components adjustment coefficients of the PITH and work environment models using control data (11). The work environment model's principal components are calculated by applying one of the neural networks, regression analysis, factor analysis, principal component analysis, independent component analysis, or singular value decomposition methods. The level of emotions, expressed in the form of the level of valence and arousal in the circumplex model of affect, is stored in the affective computer memory. Work environment data are also collected in real-time to the affective computer memory (14). In Step 2 of the data processing, the MAP data are again transferred to the CPU 12, which makes an assessment of the work environment data stored in the affective computer memory (14) against the employee's MAP² states and generates in real-time neuro decision matrices (9), which are then used as a basis to generate employee' performance and happiness (PITH) models 10, which are then applied as a basis to develop work environment alternatives and calculate their utility degrees and priority. The data from the neuro decision matrices 9 are written to the memory 14. In Step 3, the data from the neuro decision matrices 9 are sent to the CPU 12 and the CPU generates employee productivity and happiness (PITH) models and the work environment model 10 that show the interdependencies between the employee's performance and happiness and work environment data; these matrices are used as a basis to select work environment management data. These data are added to the work environment model 13 stored in the memory 14; the model describes the relationships between the level of human MAP² states and work environment. In Step 4 of the data processing, the data from the work environment model stored in the memory are sent to the CPU 12, which determines any necessary PITH models' principal components adjustment coefficients in the form of control data (11); these coefficients are added as updates to the work environment model 13 stored in the memory 14 and transferred as control commands via the biometrics network adapter to the PLC/microcontroller 5, which controls the work environment control devices 6. Employee MAP² states and work environment holistic analysis includes identifying the principal components adjustment coefficients of the PITH and work environment models using control data (11). The identification of the principal components adjustment coefficients of the PITH and work environment models in the form of control data (11) is done using one of the methods presented below, such as neural networks, regression analysis, factor analysis, principal component analysis, independent component analysis, and singular value decomposition. The present personalised work environment adaptation method and its embodiment system are designed both for fixed and mobile (e.g. a car) environments (music, visual, vibration).

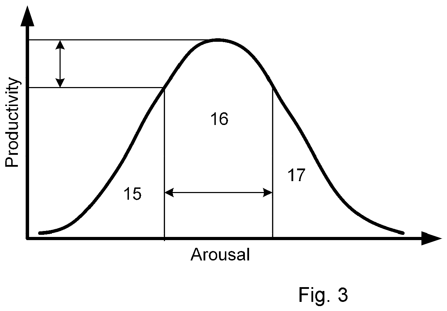

Decision making for the embodiment system of personalised work environment management for buildings takes into account the dependency (shown in Fig. 3; e.g. the Yerkes-Dodson Law) between arousal (e.g. arousal is determined based on MAP states) and performance divided into three segments: the arousal level within Segment 15 means motivation, focus, interest, stress and anxiety are going up, work feels more and more comfortable; the arousal level within Segment 16 means a rational level of stress and arousal has been achieved with optimal performance ensured; and the arousal level within Segment 17 means a drop in work efficiency due to intense stress and arousal. The embodiment system for personalised work environment management is designed to keep the arousal level in Segment 16 at all times (Fig. 3).

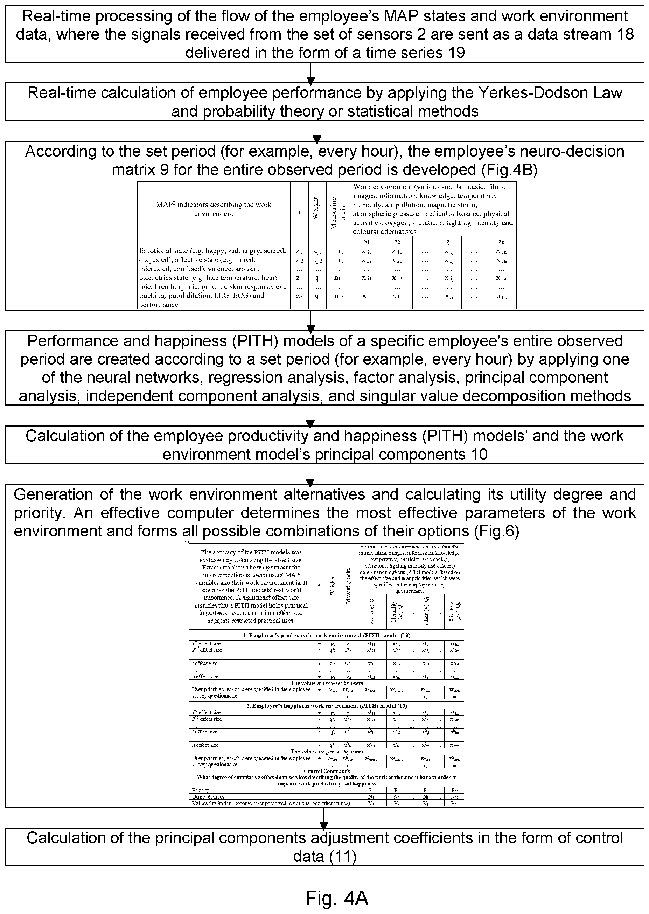

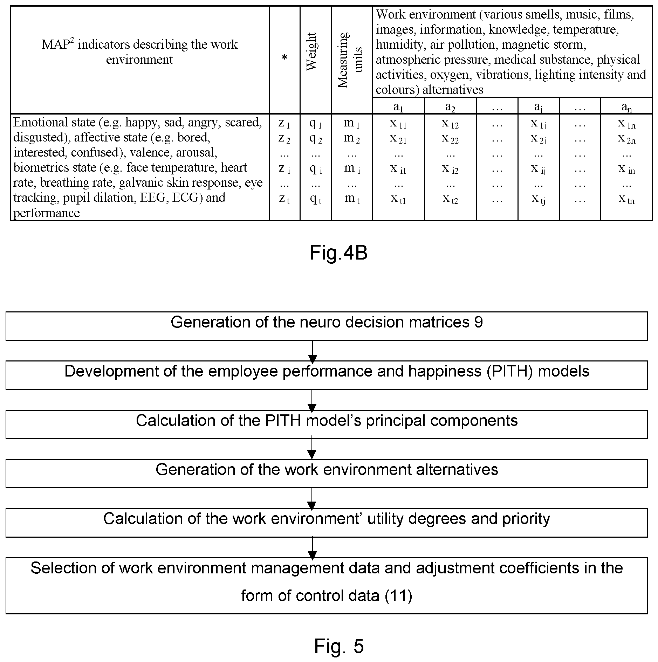

Fig. 4 shows the flow of real-time data processing, where the signals received from the set of sensors 2 are sent as a data stream 18 delivered in the form of a time series 19. Affective computer performs real-time calculation of employee performance by applying the Yerkes-Dodson Law and probability theory or statistical methods. Neuro decision matrix 9 is generated from the MAP² and work environment data at a pre-set time step in the following data processing and analysis step. Then, based on the neuro decision matrix 9 stored in memory 14, CPU 12 generates employee productivity and happiness (PITH) models and the work environment model 10 that shows dependencies between the employee's performance and happiness and work environment data. Next, the principal components of the PITH models and the work environment model 10 are calculated and then used as a basis to generate work environment alternatives and calculate their utility degrees and priorities and then, based on these matrices, the selection of work environment management data is done.

The user, filling out the questionnaire according to the valid regulations, chooses the interval at which the quantitative parameters of the working environment (e.g., temperature, humidity, air pollution, oxygen, vibrations, lighting intensity, and colours) must be changed. For example, to reduce the user's excessive arousal, the affective computer 4 decreases the levels of pollution (particulates, aerosols, CO, CO2, NOx, NO, and NO2) by 2 mg/m3. By filling out the questionnaire, the user chooses the order in which the quality parameters of the work environment (e.g. various smells, music, films, images, information, knowledge, physical activities) should be changed. For example, to reduce the user's excessive arousal, the affective computer 4:
- change the room lighting to green, blue, purple or white, the colours known to lower arousal. User preferences determine the selection of colours, as the pre-experiment questionnaire indicates.
- play soothing music to stimulate the parasympathetic nervous system. Express the music with minor chords for blood pressure to go down; low, non-dynamic volume for the respiratory and heart rates to decrease; an emphasized beat for the eye pupils to contract; and an even-flowing melody (Decker-Voigt and Pfeifer, 2020).

If the user's arousal is insufficient, the affective computer 4:
- change the room lighting to arousing colours like red, orange, or yellow, per the learner's preference.
- play energising music to stimulate the sympathetic nervous system. Express the music by major chords for blood pressure to go up; dissonance for increasing the respiratory rate and heart rate; accents to dilate the eye pupils; a strong beat to emphasise the pulse and abrupt changes in tune along with a touch of staccato (Decker-Voigt and Pfeifer, 2020).

When the affective computer 4 wants to increase a user's arousal, it can display the more interesting user on the computer, dominating bad news, images, information, and knowledge, energizing pictures and colours and playing upbeat music and videos or action movies. Users set their order of priority for such activities. The affective computer 4 enacts such actions in the order of priority that an individual user has set. When the affective computer 4 has to lower the arousal in a user, the affective computer 4 displays relaxing pictures and colours and plays soothing music and videos.

In the data processing and analysis step (Fig. 5), neuro decision matrices 9 are generated at a pre-set time step and then used as a basis to develop employee performance and happiness (PITH) models and calculate the PITH models' principal components by applying one of the neural networks, regression analysis, factor analysis, principal component analysis, independent component analysis, singular value decomposition methods, and then used as a basis to generate work environment alternatives and calculate their utility degrees and priority. Then, based on the work environment' utility degrees and priority, the selection of work environment management data and adjustment coefficients in the form of control data (11) is done.

A neuro decision matrix is a system of employee' emotional, affective, biometrics, valence, arousal (MAP) states and performance (MAP²) indicators in rows and work environment alternatives in columns that permits holistic recognition, examination, and evaluation of the dynamic interactions between the employee and its work environment system of indicators, weights, and values. MAP² date includes indicators system, its values and weights. The components of a neuro decision matrix show the employee's MAP² state in a specific work environment. When creating alternatives, a combination of the work environment's principal services (various smells, music, films, images, information, knowledge, temperature, humidity, air cleaning, oxygen, physical activities, medical substance, vibrations, lighting intensity and colours) are developing according to the PITH model's principal components. Integrated employee MAP² states and work environment analysis include identifying the principal components adjustment coefficients of the PITH and work environment models using control data (11). The PITH models' principal components are calculated by applying one of the neural networks, regression analysis, factor analysis, principal component analysis, independent component analysis, or singular value decomposition methods. The decision-making aims to determine the most rational work environment alternatives (various smells, music, films, images, information, knowledge, temperature, humidity, air cleaning, oxygen, physical activities, medical substance, vibrations, lighting intensity and colours) for the employee from a predetermined number of options. Determining the most effective alternative is holistic, controlled, open and liable. Each option is characterised by its performance in employee MAP² indicators. The most rational choice can be understood as the most favoured option of an employee. The most rational option can be calculated by applying the employee's the employee's work environment (PITH) model (13). For instance, when an employee is experiencing excessive arousal that needs to be reduced, the real-time employee PITH model (13) can suggest the following alternatives to change the work environment:
- Indoor lighting changed to arousal-reducing colors such as green, blue, purple or white, taking into account the employee's preferences they indicated in the questionnaire.
- Soothing music played with music expressions featuring minor keys (to lower blood pressure), low volume with low dynamic range (to slow down respiratory rate and heart rate), mellow rhythm (to make the pupils contract) (Decker-Voigt and Pfeifer 2020) and even melody, taking into account the employee's preferences they indicated in the questionnaire, etc.

When the effect size and user priority decision matrices of the PITH models (Fig. 7) are ready (the matrices include the effect size and user priority criteria values and weights), multiple criteria project analysis methods are then used to determine the utility degree and priority of the compared alternative options of work environment services. The priority and weights of the work environment service options depend, directly and proportionately, on the system of adequate PITH model effect size and user priority criteria to characterize the alternatives and on the criteria values and weights. Users personally assign weights to work environment services and experts compile the effect size criteria system and determine the criteria weights. The results of the assessment of alternatives are, therefore, a thorough reflection of the goals and opinions the experts and users have. The determined utility degrees of the alternatives are compared with the most rational alternative. All resulting utility degrees of the analyzed alternatives will then be between 0% (the worst option) and 100% (the best option). This will help with the visual assessment whether or not the alternatives are efficient.

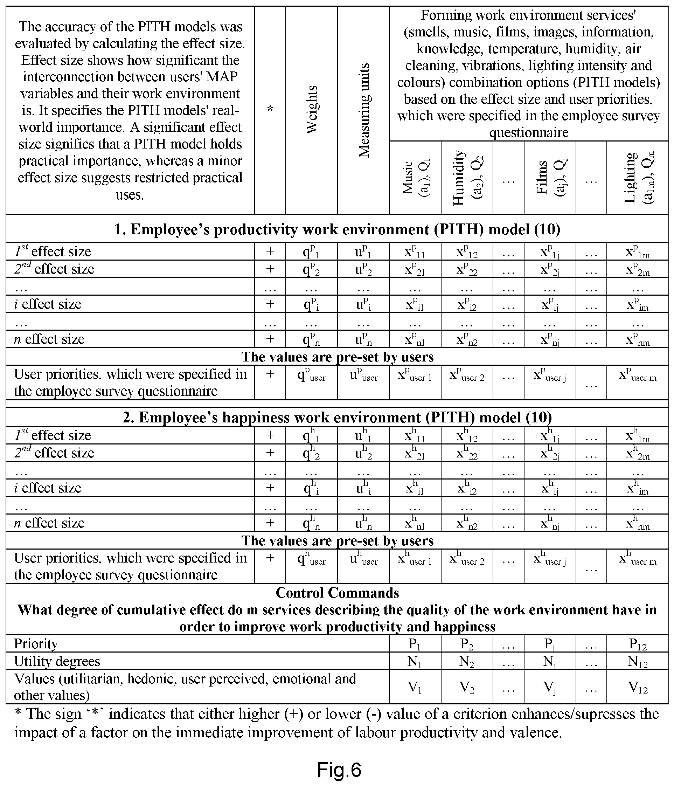

Fig. 6 presents the development of work environment services' (various smells, music, films, images, information, knowledge, temperature, humidity, air cleaning, oxygen, physical activities, medical substance, vibrations, lighting intensity and colours) combination options based on the effect size and user priorities and selecting the most rational work environment' services to improve work productivity and happiness at once. The accuracy of the PITH models was evaluated by calculating the effect size. Effect size shows how significant the interconnection between users' MAP² variables and their work environment is. It specifies the PITH models' real-world importance. A significant effect size signifies that a PITH model holds practical importance, whereas a minor effect size suggests restricted practical uses. Forming work environment services' (various smells, music, films, images, information, knowledge, temperature, humidity, air cleaning, oxygen, physical activities, medical substance, vibrations, lighting intensity and colours) combination options (PITH models) based on the effect size and user priorities, which were specified in the employee survey questionnaire.

To implement the structural diagram and the flowcharts shown in Figures 1-7, a PC or cloud computing resources are used. The embodiment system is connected to a general affective computer network or is part of such network. MAP data from sensors 2 are sent, via wireless link (e.g. Wi-Fi, 5G, 4G mobile wireless), to the affective computer 4 for further processing. The work environment adjustment level generated by the affective computer 4 is sent to the PLC/microcontroller 5 with power switching/control circuits that control the work environment maintenance devices such as HVAC (heating, ventilation, and air conditioning), audio and video equipment, etc.

## Claims

1. Method for controlling a customized positive work environment in a building, wherein work environment is controlled depending on employee's emotional, affective, biometrics, valence, arousal (MAP) states and performance (MAP²) data reflecting the employee's state, comprising the following steps:
a) real-time monitoring and decoding of the employee's MAP states by a set of sensors (2),
b) real-time recording of work environment services including various smells, music, films, images, information, knowledge, temperature, humidity, air pollution, vibrations, lighting intensity and colours (work environment services) data to a computer memory (14),
c) transmitting of the monitored and decoded data in step a) to a MAP information collection and conversion device (3),
d) recording of the collected and converted work environment services data to the affective computer memory (14), from which the data is transmitted to a central processing unit (CPU) (12),
e) performing by the CPU a numerical evaluation determining in real-time the Yerkes-Dodson Law statistical relationships, calculated and trained by probability theory or statistical methods, between work environment and the employee's arousal, which is calculated based on MAP states, in order to form control parameters of work environment and transmit the control parameters to a work environment microcontroller (5) **characterized in that**
in the step d) data transmitted to the CPU (12) are used for determining a level of performance MAP² expressed in the form of a level of performance and arousal according to the Yerkes-Dodson law and storing these data in the affective computer memory (14), the numerical evaluation in the step e) is performed by CPU (12) which is configured to generate neuro decision matrices and the numerical evaluation and comprises the following steps:
- transferring the MAP² data stored in the memory (14) to the CPU (12), which makes an assessment of the work environment data stored in the affective computer memory (14) against the levels of the employee's MAP² states and generating in real-time neuro decision matrices (9), which are used as a basis to generate work environment alternatives and calculating alternatives' utility degrees, priority and values indicating the values and significance of the levels of the employee's MAP² states and recording these data to the affective computer (4) memory (14),
- forming employee performance and happiness (PITH) models (10) by the CPU (12) of the affective computer (4) on the base of the data of the neuro-decision matrices (9) stored in the affective computer memory (14), wherein the formed employee performance and happiness models (10) show the Yerkes-Dodson Law statistical interrelationships calculated and trained probability theory or statistical methods between the employee's performance and work environment data, and records the MAP² and work environment services data to a work environment model (13) stored in the memory (14),
- calculating the PITH and work environment models' components, based on MAP² and work environment services data, wherein each component shows the employee's MAP² states in a specific work environment,
- calculating the PITH and work environment models components adjustment coefficients' in the form of control data (11) by applying one of the neural networks, regression analysis, factor analysis, principal component analysis, independent component analysis, singular value decomposition methods,
- transmitting the MAP² and work environment services data stored in the work environment model (13) to the CPU (12), which determines components adjustment coefficients in the form of control data (11)
- recording the adjustment coefficients as updates in the work environment model (13) stored in the memory (14),
- sending the adjustment coefficients via a MAP network adapter (7) as control commands to the microcontroller (5), which controls work environment control devices (6) in real-time for determining work environment services.

2. Method according to claim 1, **characterized in that** calculating the PITH and work environment models components adjustment coefficients in the form of control data (11) are based on employees'MAP² states, preferences and work environment data.

3. Method according to claim 2, **characterized in that** the identification of the principal components adjustment coefficients of the PITH and work environment models in the form of control data (11) is done using one of the methods presented below such as neural networks, regression analysis, factor analysis, principal component analysis, independent component analysis, or singular value decomposition.

4. System for controlling a customized positive work environment in a building, wherein work environment is controlled taking into account an employee's (1) emotional, affective, biometrics, valence, arousal (MAP) states and performance (MAP²) data reflecting the employee's MAP states, comprising:
a set of sensors (2), associated with the employee (1),
a work environment control devices (6) configured for recording in real-time of work environment services data including various smells, music, films, images, information, knowledge, temperature, humidity, air pollution, vibrations, lighting intensity and colours data to a computer memory (14),
a device (3) is configured for collection employee's MAP data from the set of sensors (2) and its conversion to digital data, which are recorded to a affective computer (4) memory (14), from which the data are transmitted to a central processing unit (CPU) (12), which is configured to perform numerical evaluation by determine in real-time relationships between work environment and the employee's (1) MAP² states and set accordingly control parameters of work environment and transmit the control parameters to a work environment microcontroller (5),
**characterized in that**
the CPU (12) of the affective computer (4) is configured:
- for determining a level of performance expressed in the form of a level of performance and arousal according the Yerkes-Dodson Law by using the received arousal data from the affective computer memory (14), and for storing determined data in the affective computer memory (14),
- for performing numerical evaluation of the employee performance and happiness to form control parameters of work environment,
- for forming in real-time neuro-decision matrices (9) by performing a evaluation of the work environment services data stored in the affective computer memory (14) according to the levels of the employee's MAP² states on the base of which work environment combinations alternative variants are formed and utility degrees, priority and values of the alternative variants are computed, indicating the values and significance of the levels of the employee's states, and stores their in the affective computer memory (14), and
- for forming employee performance and happiness models (10) based on the data of the neuro-decision matrices (9) stored in the affective computer memory (14), that show the Yerkes-Dodson Law dependencies linking the employee's performance to work environment data,
- for transmiting and recording employee performance and happiness models (10) data to a work environment model (13) stored in the memory (14), from which the stored data are sent to the CPU (12), which determines any necessary work environment PITH and work environment models' principal components adjustment coefficients in the form of control parameters (11) and the coefficients are then recorded as updates to the work environment model (13) stored in the memory (14) and transmitted via a MAP network adapter (7) as control commands to the microcontroller (5), which manages the work environment control devices (6) in real-time.

5. The system according to claim 4, **characterized in that** the data received from the system's devices are processed and stored in cloud computing resources.
